# EUROPÄISCHE PATENTSCHRIFT

(11) **EP 2 762 340 B1**
(45) Veröffentlichungstag und Bekanntmachung des Hinweises auf die Patenterteilung: **30.05.2018**
(21) Anmeldenummer: 14166285.8
(22) Anmeldetag: 01.02.2012
(51) Int. Cl.: B60K 6/48, B60K 6/547, B60K 6/387, F16H 3/00, B60K 6/54

(54) **Schaltgetriebe eines Hybridantriebs für ein Kraftfahrzeug**
Manual shift transmission of a hybrid drive for a motor vehicle
Engrenage d'un entraînement hybride pour un véhicule automobile

(30) Priorität: 15.03.2011 DE 102011005561
(43) Veröffentlichungstag der Anmeldung: 06.08.2014
(62) Teilanmeldung aus: 12702804.1
(73) Patentinhaber: ZF Friedrichshafen AG, 88046 Friedrichshafen (DE)
(72) Erfinder: Kaltenbach, Johannes, 88048 Friedrichshafen (DE)

(56) Entgegenhaltungen:
- DE-A1-102004 022 414
- DE-A1-102008 031 456
- FR-A1- 2 811 395
- JP-A- 2010 203 605
- US-A1- 2006 130 601
- US-A1- 2010 120 580

## Beschreibung

Die Erfindung betrifft ein Schaltgetriebe eines Hybridantriebs für ein Kraftfahrzeug nach dem Oberbegriff der Ansprüche 1 und 2.

Ein derartiges Schaltgetriebe weist einen verbrennungsmotorischen Kraftübertragungszweig und einen elektromotorischen Kraftübertragungszweig auf, die an der Ausgangswelle zusammengeführt sind. Der verbrennungsmotorische Kraftübertragungszweig umfasst die erste Eingangswelle, die Gangradsätze der ersten Gruppe sowie die Ausgangswelle und ermöglicht die Übertragung eines Drehmomentes zwischen dem Verbrennungsmotor und den mit der Ausgangswelle in Triebverbindung stehenden Antriebsrädern des Kraftfahrzeugs. Der elektromotorische Kraftübertragungszweig umfasst die zweite Eingangswelle, die Gangradsätze der zweiten Gruppe sowie die Ausgangswelle und ermöglicht die Übertragung eines Drehmomentes zwischen der Elektromaschine und den Antriebsrädern des Kraftfahrzeugs. Bei offener Koppelvorrichtung ist somit über einen geschalteten Gangradsatz der ersten Gruppe ein rein verbrennungsmotorischer Fahrbetrieb, über einen geschalteten Gangradsatz der zweiten Gruppe ein rein elektromotorischer Fahrbetrieb, sowie über jeweils einen geschalteten Gangradsatz der ersten und zweiten Gruppe ein Kombinationsfahrbetrieb beider Aggregate (Verbrennungsmotor und Elektromaschine) mit einem motorischen oder generatorischen Betrieb der Elektromaschine und mit fester Übersetzung möglich.

Durch das Schließen der Koppelvorrichtung kann der Verbrennungsmotor bei stehendem Kraftfahrzeug mittels der Elektrömaschine gestartet werden. Zudem werden durch das Schließen der Koppelvorrichtung die Gangradsätze der zweiten Gruppe für den verbrennungsmotorischen Fahrbetrieb und die Gangradsätze der ersten Gruppe für den elektromotorischen Fahrbetrieb verfügbar gemacht. Bei entsprechender Übersetzung und Zuordnung der Gangradsätze werden somit insgesamt weniger Gangradsätze benötigt, und das Schaltgetriebe kann entsprechend einfacher sowie kompakter ausgeführt werden.

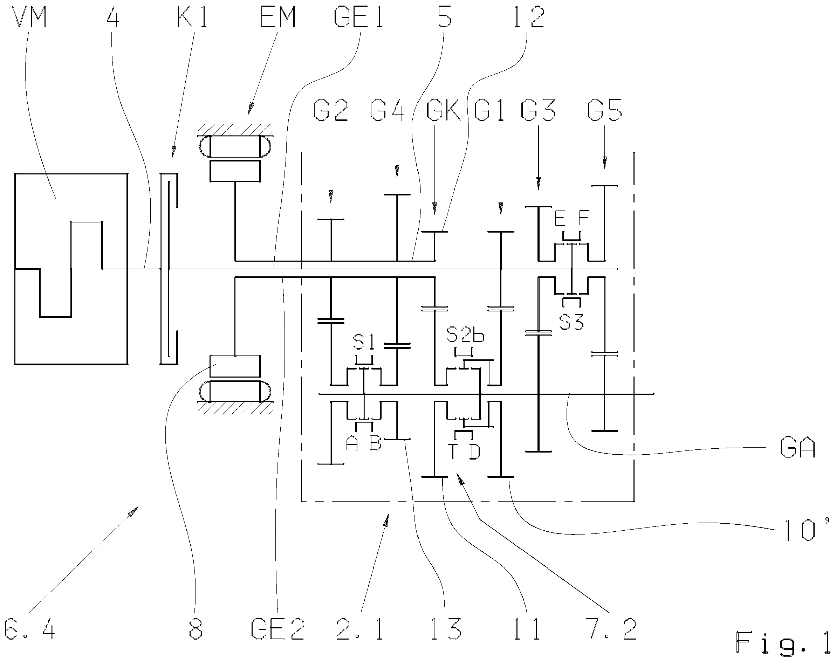

In der DE 199 60 621 B4 ist ein derartiges Schaltgetriebe in drei Ausführungsvarianten beschrieben. In allen Ausführungsformen weist der verbrennungsmotorische Kraftübertragungszweig eine erste Vorgelegewelle auf, die eingangsseitig über eine Eingangskonstante, eine erste Eingangswelle und eine Reibungskupplung mit der Triebwelle eines Verbrennungsmotors sowie ausgangsseitig über eine erste Gruppe selektiv schaltbarer Gangradsätze mit einer Ausgangswelle in Triebverbindung bringbar ist. In der ersten Ausführungsform nach der dortigen Fig. 1 ist eine zweite Eingangswelle als eine zweite Vorgelegewelle ausgebildet, die drehfest mit dem Rotor einer Elektromaschine verbunden und über eine zweite Gruppe selektiv schaltbarer Gangradsätze mit der Ausgangswelle in Triebverbindung bringbar ist. Die Koppelvorrichtung besteht in diesem Fall aus einer zwischen der ersten Eingangswelle und der zweiten Vorgelegewelle angeordneten Triebstufe sowie einer schaltbaren Kupplung, die zwischen dem vorgelegeseitigen Triebrad der Triebstufe und der zweiten Vorgelegewelle angeordnet ist.

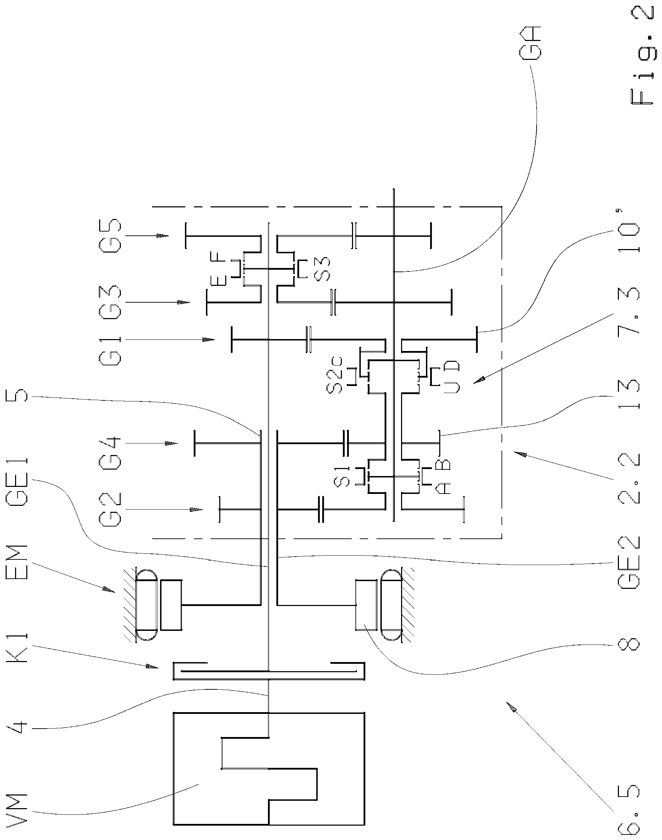

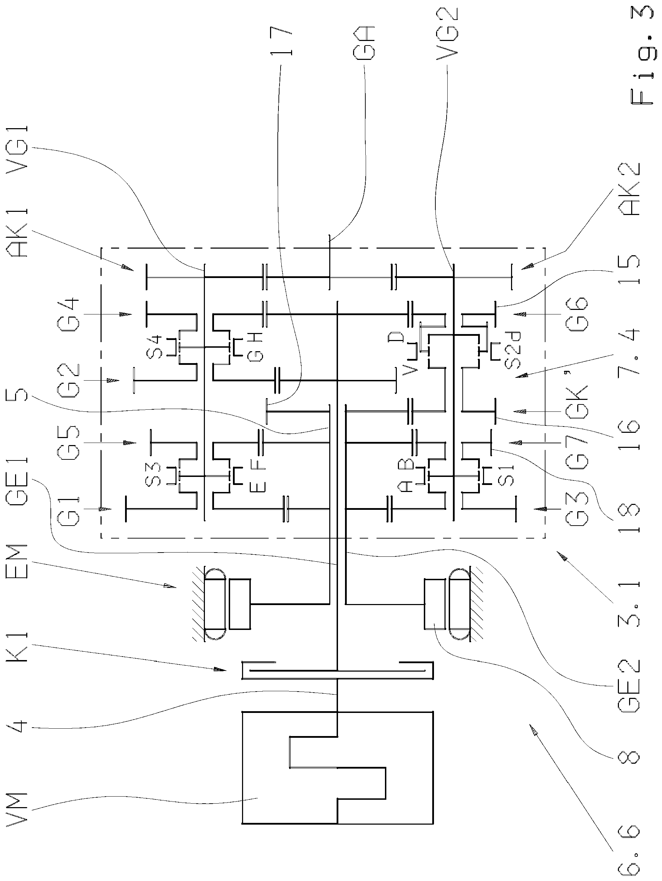

In der zweiten und dritten Ausführungsform nach den dortigen Figuren 2 und 3 ist die zweite Eingangswelle als eine hohle Rotorwelle ausgebildet, die koaxial über der ersten Eingangswelle angeordnet und drehfest mit dem Rotor einer koaxial über der ersten Eingangswelle angeordneten Elektromaschine verbunden ist. Die Rotorwelle steht über eine zweite Eingangskonstante mit der zweiten Vorgelegewelle in Triebverbindung, die über die zweite Gruppe selektiv schaltbarer Gangradsätze mit der Ausgangswelle in Triebverbindung bringbar ist. Die Koppelvorrichtung besteht in diesem Fall aus einer schaltbaren Kupplung, die zwischen der ersten Eingangswelle und der Rotorwelle angeordnet ist.

Bei einem weiteren derartigen Schaltgetriebe nach der WO 2008/ 138 387 A1 sind beide Eingangswellen als Vorgelegewellen ausgebildet. Die erste Eingangs- bzw. Vorgelegewelle des verbrennungsmotorischen Kraftübertragungszweiges ist eingangsseitig über eine steuerbare Trennkupplung mit der Triebwelle eines Verbrennungsmotors verbindbar und ausgangsseitig über eine erste Gruppe selektiv schaltbarer Gangradsätze mit einer Ausgangswelle in Triebverbindung bringbar. Die zweite Eingangs- bzw. Vorgelegewelle des elektromotorischen Kraftübertragungszweiges ist eingangsseitig drehfest mit dem Rotor einer Elektromaschine verbunden und ausgangsseitig über eine zweite Gruppe selektiv schaltbarer Gangradsätze mit der Ausgangswelle in Triebverbindung bringbar. Die Gangradsätze beider Gruppen sind in gemeinsamen Radialebenen angeordnet und nutzen jeweils ein gemeinsames, auf der Ausgangswelle angeordnetes Abtriebsrad. Die Koppelvorrichtung ist in diesem Fall dadurch gebildet, dass die Losräder und die zugeordneten, in einem Schaltpaket zusammengefassten Gangkupplungen von zwei axial benachbarten Gangradsätzen der zweiten Gruppe an der Ausgangswelle angeordnet sind, wodurch die Kopplung beider Eingangswellen unabhängig von der Schaltung eines der betreffenden Gangradsätze möglich ist.

Aus der FR 2811395 A1 ist ein Schaltgetriebe eines Hybridantriebs für ein Kraftfahrzeug bekannt, welcher zwei koaxial verlaufende Eingangswellen und eine gemeinsame Ausgangswelle aufweist, wobei die erste dieser Eingangswellen mit einem Verbrennungsmotor oder einem Elektromotor in Verbindung gebracht werden kann und über eine erste Gruppe selektiv schaltbarer Gangradsätze mit der Ausgangswelle in Triebverbindung gebracht werden kann. Die zweite Eingangswelle ist als Hohlwelle ausgeformt, ist mit einer Elektromaschine verbunden und kann über eine zweite Gruppe selektiv schaltbarer Gangradsätze mit der Ausgangswelle in Triebverbindung gebracht werden. Diese Elektromaschine ist sowohl als Elektromotor als auch als Generator betreibbar. Beide Eingangswellen können über eine Koppelvorrichtung miteinander in Triebverbindung gebracht werden. Das beschriebene Schaltgetriebe ist aus einem Doppelkupplungsgetriebe mit zwei koaxial verlaufenden Eingangswellen abgeleitet. Die Koppelvorrichtung umfasst eine schaltbare Kupplung, die der ersten Eingangswelle zugeordnet und axial benachbart zu dem getriebeseitigen Ende der Ausgangswelle angeordnet.
Die als nächstliegender Stand der Technik betrachtete Schrift US20100120580 offenbart ein Schaltgetriebe eines Hybridantriebs für ein Kraftfahrzeug, mit zwei koaxialen Eingangswellen und einer gemeinsamen Ausgangswelle, wobei die erste Eingangswelle mit der Triebwelle eines Verbrennungsmotors verbindbar und über eine erste Gruppe selektiv schaltbarer Gangradsätze mit der Ausgangswelle in Triebverbindung bringbar ist, wobei die zweite Eingangswelle mit dem Rotor einer als Motor und als Generator betreibbaren Elektromaschine in Triebverbindung steht und über eine zweite Gruppe selektiv schaltbarer Gangradsätze mit der Ausgangswelle in Triebverbindung bringbar ist, wobei beide Eingangswellen über eine schaltbare Koppelvorrichtung miteinander in Triebverbindung bringbar sind, und wobei die erste Eingangswelle zentral angeordnet ist, die zweite Eingangswelle als eine Hohlwelle ausgebildet und koaxial über der ersten Eingangswelle angeordnet ist.

Die bekannten Schaltgetriebe sind speziell für den Einsatz in einem Hybridantrieb eines Kraftfahrzeugs ausgelegt und somit vergleichsweise aufwendig sowie teuer herstellbar. Der Markterfolg von hybridangetriebenen Kraftfahrzeugen hängt aber wesentlich von günstigen Herstellungskosten der Baugruppen des Hybridantriebsstrangs, insbesondere auch des Schaltgetriebes ab.

Der vorliegenden Erfindung liegt daher die Aufgabe zugrunde, ein Schaltgetriebe eines Hybridantriebs der eingangs genannten Art vorzuschlagen, das ohne wesentliche Funktionseinschränkungen besonders kostengünstig herstellbar ist.

Eine erste Lösung dieser Aufgabe besteht in Verbindung mit den Merkmalen des Oberbegriffs des Anspruchs 1 darin, dass dass die Schaltkupplung der Getriebestufe mit einer Gangkupplung des Gangradsatzes eines Vorwärtsganges in einem gemeinsamen Schaltpaket zusammengefasst ist, über das das Losrad des Gangradsatzes des Vorwärtsgangs in einer ersten Schaltstellung drehfest mit dem Losrad der Getriebestufe oder eines Gangradsatzes des vierten Vorwärtsgangs gekoppelt ist, in einer Neutralstellung ungekoppelt ist, und in einer zweiten Schaltstellung drehfest mit der Ausgangswelle gekoppelt ist.

Eine zweite Lösung dieser Aufgabe besteht in Verbindung mit den Merkmalen des Oberbegriffs des Anspruchs 2 darin, dass die Schaltkupplung der Getriebestufe mit einer Gangkupplung des Gangradsatzes eines Vorwärtsganges in einem gemeinsamen Schaltpaket zusammengefasst ist, über das das Losrad des Gangradsatzes des Vorwärtsgangs in einer ersten Schaltstellung drehfest mit dem Losrad der Getriebestufe oder eines Gangradsatzes siebten Vorwärtsgangs gekoppelt ist, in einer Neutralstellung ungekoppelt ist, und in einer zweiten Schaltstellung drehfest mit einer Vorgelegewelle gekoppelt ist.

Vorteilhafte Ausgestaltungen und Weiterbildungen dieses Schaltgetriebes sind Gegenstand der Unteransprüche 3 bis 14.

Die Erfindung geht demnach von einem an sich bekannten Schaltgetriebe eines Hybridantriebs für ein Kraftfahrzeug aus, das zwei Eingangswellen GE1, GE2 und eine gemeinsame Ausgangswelle GA aufweist. Bei diesem Schaltgetriebe ist die erste Eingangswelle GE1 mit der Triebwelle eines Verbrennungsmotors VM verbindbar und über eine erste Gruppe selektiv schaltbarer Gangradsätze (G1, G3, G5; G2, G4, G6) mit der Ausgangswelle GA in Triebverbindung bringbar. Die zweite Eingangswelle GE2 steht mit dem Rotor einer als Motor und als Generator betreibbaren Elektromaschine EM in Triebverbindung und ist über eine zweite Gruppe selektiv schaltbarer Gangradsätze (G2, G4; G1, G3, G5, G7) mit der Ausgangswelle GA in Triebverbindung bringbar. Beide Eingangswellen GE1, GE2 sind über eine schaltbare Koppelvorrichtung miteinander in Triebverbindung bringbar.

Zur kostengünstigen Herstellung eines derartigen Schaltgetriebes ist gemäß der Erfindung vorgesehen, dass dieses aus einem Doppelkupplungsgetriebe mit zwei koaxialen Eingangswellen GE1, GE2 der vorgenannten Anordnung abgeleitet ist. Dabei umfasst die Koppelvorrichtung eine Getriebestufe und/oder eine schaltbare Kupplung, die anstelle desjenigen Gangradsatzes und seiner zugeordneten Gangkupplung vorgesehen sind, der in dem zu Grunde liegenden Doppelkupplungsgetriebe der ersten Eingangswelle GE1 zugeordnet und axial benachbart zu dem getriebeseitigen Ende der zweiten Eingangswelle GE2 angeordnet ist. Dies bedeutet, dass der betreffende, in dem zu Grunde liegenden Doppelkupplungsgetriebe vorhandene Gangradsatz und die diesem zugeordnete Gangkupplung in dem Schaltgetriebe gemäß der Erfindung weggelassen und bauraumneutral durch die Getriebestufe und/oder die Schaltkupplung der Koppelvorrichtung zur Verbindung der beiden Eingangswellen GE1, GE2 ersetzt werden. Hierdurch ist ein Schaltgetriebe eines Hybridantriebs geschaffen, das weitgehend identisch mit dem zugrunde liegenden Doppelkupplungsgetriebe ist, d.h. eine hohe Zahl von Gleichteilen mit diesem aufweist, und daher, z.B. in einer gemeinsamen Produktionslinie mit dem Doppelkupplungsgetriebe, kostengünstig herstellbar ist.

Damit der gegenüber dem zugrunde liegenden Doppelkupplungsgetriebe weggefallene Gangradsatz nicht zu Funktionseinschränkungen des Schaltgetriebes bzw. des betreffenden Hybridantriebs führt, sollte der betreffende, in dem zugrunde liegenden Doppelkupplungsgetriebe axial benachbart zu dem getriebeseitigen Ende der zweiten Eingangswelle GE2 angeordnete Gangradsatz bevorzugt als ein Umkehr-Gangradsatz R ausgebildet und dem Rückwärtsgang zugeordnet sein. Auf den Gangradsatz des Rückwärtsgangs kann in dem Schaltgetriebe des Hybridantriebs problemlos verzichtet werden, da ein Rückwärts-Anfahren oder Rückwärts-Rangieren über einen Gangradsatz eines Vorwärtsgangs in Verbindung mit einer Drehrichtungsumkehr mittels der Elektromaschine möglich ist. Falls diese geeignete Anordnung des Umkehr-Gangradsatzes R in dem zu Grunde liegenden Doppelkupplungsgetriebe nicht gegeben ist, kann diese gegebenenfalls durch eine entsprechende

Änderung der axialen Anordnung der der ersten Eingangswelle zugeordneten Gangradsätze geschaffen werden, sofern die räumlichen Gegebenheiten dies erlauben.

Bei den folgenden Ausführungsformen des Schaltgetriebes (nach den Figuren 1 bis 4) ist zur Vereinfachung der Betätigungsvorrichtung bevorzugt vorgesehen, dass die Schaltkupplung (T, U; V, W) der jeweiligen Koppelvorrichtung mit der Gangkupplung D des verbliebenen Gangradsatzes (G1; G6) der beiden Gangradsätze (R, G1; R, G6) in einem gemeinsamen Schaltpaket (S2b, S2c; S2d, S2e) zusammengefasst ist, über das das Losrad des verbliebenen Gangradsatzes (G1; G6) der beiden Gangradsätze (R, G1; R, G6) in einer ersten Schaltstellung drehfest mit dem Losrad der Getriebestufe (GK; GK') bzw. des getriebeinneren Gangradsatzes (G4; G7) gekoppelt ist, in einer Neutralstellung ungekoppelt ist, und in einer zweiten Schaltstellung drehfest mit der Ausgangswelle GA bzw. mit der betreffenden Vorgelegewelle VG2 gekoppelt ist.

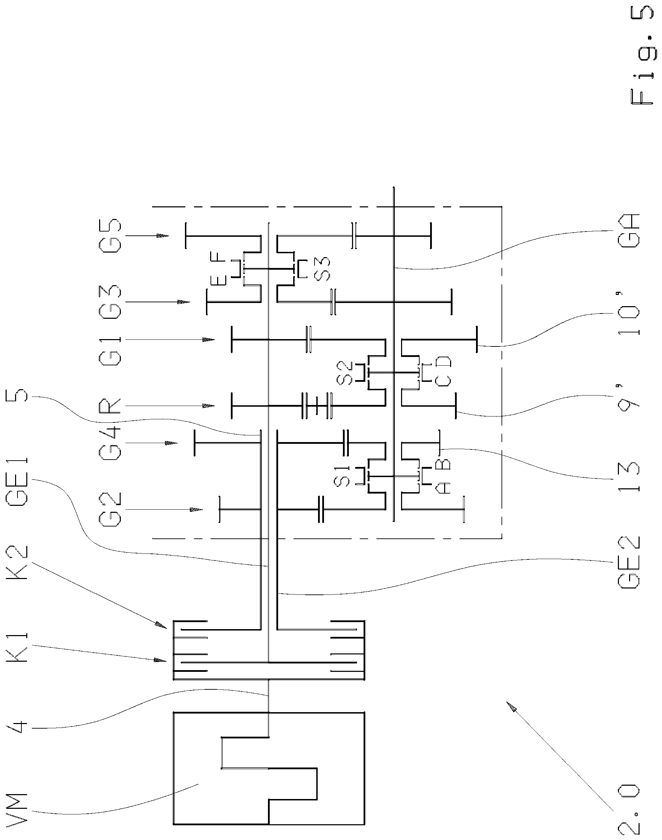

Wenn in dem zugrunde liegenden Doppelkupplungsgetriebe (entsprechend Fig. 5) die Gangradsätze (G1 - G5, R) jeweils unmittelbar zwischen einer der beiden Eingangswellen GE1, GE2 und der Ausgangswelle GA angeordnet sind, und zumindest die Losräder und die zugeordneten Gangkupplungen C, D der beiden der ersten Eingangswelle GE1 zugeordneten und axial benachbart zu dem getriebeseitigen Ende der zweiten Eingangswelle GE2 angeordneten Gangradsätze R, G1 auf der Ausgangswelle GA angeordnet sind, umfasst die Koppelvorrichtung eine Getriebestufe GK, die aus einem auf der Ausgangswelle GA drehbar gelagerten Losrad und einem an dem getriebeseitigen Ende der zweiten Eingangswelle GE2 drehfest angeordneten Festrad besteht, und eine Schaltkupplung T zur Kopplung des Losrades des verbliebenen Gangradsatzes G1 der beiden Gangradsätze R, G1 mit dem Losrad der Getriebestufe GK.

Die Übersetzung i_{GK} der Getriebestufe GK entspricht bevorzugt der Übersetzung i_{G1} des über die Schaltkupplung T der Koppelvorrichtung koppelbaren Gangradsatzes (G1) (i_{GK} = i_{G1}), da die wirksame Koppelübersetzung i_{K} zwischen der ersten Eingangswelle GE1 und der zweiten Eingangswelle GE2 bei geschlossener Schaltkupplung T dann gleich eins ist (i_{K} = i_{G1} / i_{GK} = 1).

Wenn in dem zugrunde liegenden Doppelkupplungsgetriebe (entsprechend Fig. 5) neben den zuvor genannten Merkmalen auch das Losrad und die Gangkupplung B des der zweiten Eingangswelle GE2 zugeordneten und an dem getriebeseitigen Ende der zweiten Eingangswelle GE2 angeordneten getriebeinneren Gangradsatzes G4 auf der Ausgangswelle GA angeordnet sind, kann die Koppelvorrichtung alternativ auch den getriebeinneren Gangradsatz G4 und eine Schaltkupplung U zur Kopplung des Losrades des verbliebenen Gangradsatzes (G1) der beiden Gangradsätze R, G1 mit dem Losrad des getriebeinneren Gangradsatzes G4 umfassen. Dem Vorteil der Einsparung einer separaten Getriebestufe GK steht in diesem Fall der mögliche Nachteil einer von eins verschiedenen Koppelübersetzung i_{K} zwischen den beiden Eingangswellen GE1, GE2 gegenüber (i_{K} ≠ 1).

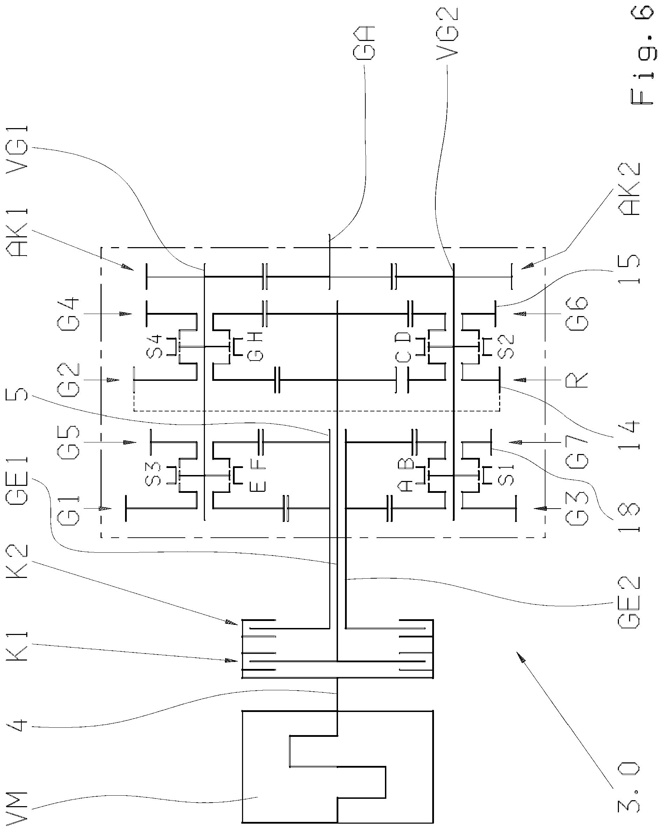

Wenn in dem zugrunde liegenden Doppelkupplungsgetriebe (entsprechend Fig. 6) die Gangradsätze (G1 - G7, R) jeweils zwischen einer der beiden Eingangswellen GE1, GE2 und einer von zwei jeweils über eine Ausgangskonstante AK1, AK2 mit der Ausgangswelle GA in Triebverbindung stehenden Vorgelegewellen VG1, VG2 angeordnet sind, und zumindest die Losräder und die zugeordneten Gangkupplungen C, D der beiden der ersten Eingangswelle GE1 und einer Vorgelegewelle (VG2) der beiden Vorgelegewellen VG1, VG2 zugeordneten sowie axial benachbart zu dem getriebeseitigen Ende der zweiten Eingangswelle GE2 angeordneten Gangradsätze R, G6 auf der betreffenden Vorgelegewelle VG2 angeordnet sind, umfasst die Koppelvorrichtung bevorzugt eine Getriebestufe GK', die aus einem auf der betreffenden Vorgelegewelle VG2 drehbar gelagerten Losrad und einem an dem getriebeseitigen Ende der zweiten Eingangswelle GE2 drehfest angeordneten Festrad besteht, und eine Schaltkupplung V zur Kopplung des Losrades des verbliebenen Gangradsatzes (G6) der beiden Gangradsätze R, G6 mit dem Losrad der Getriebestufe GK'.

Auch in diesem Fall entspricht die Übersetzung i_{GK}' der Getriebestufe GK' bevorzugt der Übersetzung i_{G6} des über die Schaltkupplung V der Koppelvorrichtung koppelbaren Gangradsatzes (G6) (i_{GK}' = i_{G6}), damit die wirksame Koppelübersetzung i_{K} zwischen der ersten Eingangswelle GE1 und der zweiten Eingangswelle GE2 bei geschlossener Schaltkupplung V gleich eins ist (i_{K} = i_{G6} / i_{GK}' = 1).

Wenn in dem zugrunde liegenden Doppelkupplungsgetriebe (entsprechend Fig. 6) neben den zuvor genannten Merkmalen auch das Losrad und die zugeordnete Gangkupplung B des der zweiten Eingangswelle GE2 zugeordneten sowie an dem getriebeseitigen Ende der zweiten Eingangswelle GE2 angeordneten getriebeinneren Gangradsatzes G7 auf der betreffenden Vorgelegewelle VG2 angeordnet sind, kann die Koppelvorrichtung alternativ auch den getriebeinneren Gangradsatz G7 und eine Schaltkupplung W zur Kopplung des Losrades des verbliebenen Gangradsatzes (G6) der beiden Gangradsätze R, G6 mit dem Losrad des getriebeinneren Gangradsatzes G7 umfassen. Auch in diesem Fall steht dem Vorteil der Einsparung einer separaten Getriebestufe GK' der mögliche Nachteil einer von eins verschiedenen Koppelübersetzung i_{K} zwischen den beiden Eingangswellen GE1, GE2 gegenüber (i_{K} ≠ 1).

Bei den vorgenannten Ausführungsformen des Hybridantriebs kann die erste Eingangswelle jeweils über eine Reibungskupplung K1 mit der Triebwelle des Verbrennungsmotors verbindbar sein.

Es ist jedoch auch möglich, dass die erste Eingangswelle jeweils über eine robustere und kostengünstigere Klauenkupplung mit der Triebwelle des Verbrennungsmotors verbindbar ist, da diese bei geschlossener Schaltkupplung mittels der Elektromaschine synchronisierbar ist.

Die erste Eingangswelle kann jedoch auch unmittelbar drehfest mit der Triebwelle des Verbrennungsmotors verbunden sein, und somit die betreffende Trennkupplung eingespart werden. Hierdurch stehen zwar die der ersten Eingangswelle zugeordneten Gangradsätze (G1, G3, G5; G2, G4, G6) für einen reinen Elektrofahrbetrieb, d.h. einen Antrieb nur über die Elektromaschine, nicht zur Verfügung, aufgrund des gegenüber einem Verbrennungsmotor größeren nutzbaren Drehzahlbereichs einer Elektromaschine stellt dies aber keine wesentliche Betriebseinschränkung dar.

Bei den vorgenannten Ausführungsformen des Hybridantriebs kann die Elektromaschine jeweils koaxial über der ersten Eingangswelle angeordnet sein, und der Rotor der Elektromaschine unmittelbar drehfest mit der zweiten Eingangswelle verbunden sein.

Um eine leistungsschwächere und entsprechend kompaktere sowie leichtere Elektromaschine verwenden zu können, kann jedoch auch vorgesehen sein, dass die Elektromaschine achsparallel benachbart zu der ersten Eingangswelle angeordnet ist, und der Rotor der Elektromaschine über eine Eingangsgetriebestufe KE mit einer Übersetzung i_{KE} größer als eins mit der zweiten Eingangswelle in Triebverbindung steht (i_{KE} > 1,0).

Für denselben Zweck kann auch alternativ vorgesehen sein, dass die Elektromaschine koaxial über der ersten Eingangswelle angeordnet ist, und der Rotor der Elektromaschine über eine als Planetengetriebe ausgebildete Eingangsgetriebestufe KE' mit einer Übersetzung i_{KE}' größer als eins mit der zweiten Eingangswelle GE2 in Triebverbindung steht (i_{KE}' > 1,0).

Zur Verdeutlichung der Erfindung ist der Beschreibung eine Zeichnung mit Ausführungsbeispielen beigefügt. In dieser zeigt
- Fig. 1: einen Hybridantrieb eines Kraftfahrzeugs mit einer ersten Ausführungsform eines Schaltgetriebes, das aus einem Doppelkupplungsgetriebe nach Fig. 5 abgeleitet ist,
- Fig. 2: einen Hybridantrieb eines Kraftfahrzeugs mit einer zweiten Ausführungsform eines Schaltgetriebes, das aus einem Doppelkupplungsgetriebe nach Fig. 5 abgeleitet ist,
- Fig. 3: einen Hybridantrieb eines Kraftfahrzeugs mit einer ersten Ausführungsform eines Schaltgetriebes, das aus einem Doppelkupplungsgetriebe nach Fig. 6 abgeleitet ist,
- Fig. 4: einen Hybridantrieb eines Kraftfahrzeugs mit einer zweiten Ausführungsform eines Schaltgetriebes, das aus einem Doppelkupplungsgetriebe nach Fig. 6 abgeleitet ist,
- Fig. 5: ein erstes Doppelkupplungsgetriebe, und
- Fig. 6: ein zweites Doppelkupplungsgetriebe.

In Fig. 5 ist in schematischer Form ein an sich bekanntes Doppelkupplungsgetriebe 2.0 abgebildet, aus dem zwei nachfolgend beschriebene Ausführungsformen eines Schaltgetriebes 2.1, 2.2 eines Hybridantriebs 6.4, 6.5 abgeleitet sind. Das Doppelkupplungsgetriebe 2.0 weist zwei koaxiale Eingangswellen GE1, GE2 und eine gemeinsame Ausgangswelle GA auf. Die erste Eingangswelle GE1 ist zentral innerhalb der als Hohlwelle ausgebildeten zweiten Eingangswelle GE2 angeordnet. Beide Eingangswellen GE1, GE2 sind eingangsseitig über jeweils eine zugeordnete Reibungskupplung K1, K2 mit der Triebwelle 4 eines Verbrennungsmotors VM verbindbar. Ausgangsseitig sind beide Eingangswellen GE1, GE2 jeweils über mehrere selektiv schaltbare Gangradsätze R, G1, G3, G5 bzw. G2, G4 mit der Ausgangswelle GA in Triebverbindung bringbar.

Vorliegend sind der ersten Eingangswelle GE1 der Umkehr-Gangradsatz R des Rückwärtsgangs und die Gangradsätze G1, G3, G5 der ungeraden Vorwärtsgänge zugeordnet. Der zweiten Eingangswelle GE2 sind die Gangradsätze G2, G4 der geraden Vorwärtsgänge zugeordnet. Die Losräder und die Gangkupplungen A, B, C, D der Gangradsätze G2, G4 und R, G1 sind jeweils auf der Ausgangswelle GA und die betreffenden Festräder jeweils drehfest auf der zugeordneten Eingangswelle GE2 bzw. GE1 angeordnet. Die Gangkupplungen A bis F sind jeweils paarweise in einem gemeinsamen Schaltpaket S1, S2, S3 zusammengefasst. So sind die Gangkupplungen A und B der Gangradsätze G2, G4 des zweiten und des vierten Vorwärtsgangs in einem ersten Schaltpaket S1, die Gangkupplungen C und D des Umkehr-Gangradsatzes R des Rückwärtsgangs und des Gangradsatzes G1 des ersten Vorwärtsgangs in einem zweiten Schaltpaket S2, sowie die Gangkupplungen E und F der Gangradsätze G3, G5 des dritten und des fünften Vorwärtsgangs in einem dritten Schaltpaket S3 angeordnet. Demzufolge sind die beiden Schaltpakete S1, S2, in denen die Gangkupplungen A, B der Gangradsätze G2, G4 des zweiten Vorwärtsgangs und des vierten Vorwärtsgangs sowie die Gangkupplungen C, D des Umkehr-Gangradsatzes R des Rückwärtsgangs und des Gangradsatzes G1 des ersten Vorwärtsgangs zusammengefasst sind, auf der Ausgangswelle GA angeordnet Für die nachfolgend beschriebenen Ausführungen eines Schaltgetriebes 2.1, 2.2 eines Hybridantriebs 6.4, 6.5 nach den Figuren 1 und 2 ist es wichtig festzuhalten, dass der unmittelbar axial benachbart zu dem getriebeseitigen Ende 5 der zweiten Eingangswelle GE2 angeordnete Umkehr-Gangradsatz R und der axial daneben angeordnete Gangradsatz G1 der ersten Eingangswelle GE1 zugeordnet sind, und dass die Losräder 9', 10' sowie die zugeordneten Gangkupplungen C, D dieser Gangradsätze R, G1 auf der Ausgangswelle GA angeordnet sind.

Für die zweite Ausführungsform des Schaltgetriebes 2.2 nach Fig. 2 ist zudem von Bedeutung, dass auch das Losrad 13 und die zugeordnete Gangkupplung B des der zweiten Eingangswelle GE2 zugeordneten und an deren getriebeseitigen Ende 5 angeordneten Gangradsatzes G4 ebenfalls auf der Ausgangswelle GA angeordnet sind.

Ausgehend von dem Doppelkupplungsgetriebe 2.0 nach Fig. 5 ist eine erste Ausführungsform eines Schaltgetriebes 2.1 eines Hybridantriebs 6.4 nach Fig. 1 dadurch geschaffen, dass anstelle des Umkehr-Gangradsatzes R des Rückwärtsgangs und der zugeordneten Gangkupplung C eine Koppelvorrichtung 7.2 vorgesehen ist, mittels der die beiden Eingangswellen GE1, GE2 miteinander in Triebverbindung bringbar sind. Die Koppelvorrichtung 7.2 umfasst eine Getriebestufe GK mit einem auf der Ausgangswelle GA drehbar gelagerten Losrad 11 und einem an dem getriebeseitigen Ende 5 der zweiten Eingangswelle GE2 drehfest angeordneten Festrad 12 sowie einer Schaltkupplung T, die in dem Schaltgetriebe 2.1 anstelle des Umkehr-Gangradsatzes R sowie der zugeordneten Gangkupplung C des Rückwärtsgangs des zugrunde liegenden Doppelkupplungsgetriebes 2.0 (Fig. 5) angeordnet sind.

Die Schaltkupplung T der Getriebestufe GK ist mit der Gangkupplung D des Gangradsatzes G1 des ersten Vorwärtsgangs in einem gemeinsamen Schaltpaket S2b zusammengefasst, über das das Losrad 10' des Gangradsatzes G1 des ersten Vorwärtsgangs in einer ersten Schaltstellung drehfest mit dem Losrad 11 der Getriebestufe GK gekoppelt ist, in einer Neutralstellung ungekoppelt ist, und in einer zweiten Schaltstellung drehfest mit der Ausgangswelle GA gekoppelt ist.

Die zwischen der Ausgangswelle GA und der zweiten Eingangswelle GE2 wirksame Übersetzung i_{GK} der Getriebestufe GK entspricht bevorzugt der Übersetzung i_{G1} des Gangradsatzes G1 des ersten Vorwärtsgangs (i_{GK} = i_{G1}), da die wirksame Koppelübersetzung i_{K} zwischen der ersten Eingangswelle GE1 und der zweiten Eingangswelle GE2 bei geschlossener Schaltkupplung T dann gleich eins ist (i_{K} = i_{G1} / i_{GK} = 1).

Eine zweite aus dem Doppelkupplungsgetriebe 2.0 nach Fig. 5 abgeleitete Ausführungsform des Schaltgetriebes 2.2 eines Hybridantriebs 6.5 nach Fig. 2 ist weitgehend identisch mit dem Schaltgetriebe 2.1 gemäß Fig. 1. Der wesentliche Unterschied dazu besteht darin, dass die Koppelvorrichtung 7.3 nunmehr den axial benachbarten, der zweiten Eingangswelle GE2 zugeordneten Gangradsatz G4 des vierten Vorwärtsgangs und eine Schaltkupplung U umfasst, d.h., dass anstelle einer separaten Getriebestufe GK der Gangradsatz G4 des vierten Vorwärtsgangs zusätzlich zur Kopplung der beiden Eingangswellen GE1, GE2 genutzt wird.

Die Schaltkupplung U ist dabei mit der Gangkupplung D des Gangradsatzes G1 des ersten Vorwärtsgangs in einem gemeinsamen Schaltpaket S2c zusammengefasst, über das das Losrad 10' des Gangradsatzes G1 des ersten Vorwärtsgangs in einer ersten Schaltstellung drehfest mit dem Losrad 13 des Gangradsatzes G4 des vierten Vorwärtsgangs gekoppelt ist, in einer Neutralstellung ungekoppelt ist, und in einer zweiten Schaltstellung drehfest mit der Ausgangswelle GA gekoppelt ist. Dem Vorteil der Einsparung einer separaten Getriebestufe GK steht in diesem Fall der mögliche Nachteil einer von eins verschiedenen Koppelübersetzung i_{K} gegenüber (i_{K} ≠ 1). Die bei geschlossener Schaltkupplung U zwischen der ersten Eingangswelle GE1 und der zweiten Eingangswelle GE2 wirksame Koppelübersetzung i_{K} ergibt sich in der vorliegenden Ausführungsform des Schaltgetriebes 2.2 aus der Gleichung i_{K} = i_{G1} / i_{G4} > 1.

Auch die Schaltgetriebe 2.1, 2.2 der Hybridantriebe 6.4, 6.5 nach den Figuren 1 und 2 sind jeweils mit geringen Änderungen bauraumneutral und ohne wesentliche Funktionseinschränkungen aus dem Doppelkupplungsgetriebe 2.0 nach Fig. 5 abgeleitet und entsprechend kostengünstig herstellbar.

In Fig. 6 ist in schematischer Form ein an sich bekanntes Doppelkupplungsgetriebe 3.0 abgebildet, aus dem zwei nachfolgend beschriebene Ausführungsformen eines Schaltgetriebes 3.1, 3.2 eines Hybridantriebs 6.6, 6.7 abgeleitet sind. Das Doppelkupplungsgetriebe 3.0 weist zwei koaxiale Eingangswellen GE1, GE2 und eine gemeinsame Ausgangswelle GA auf. Die erste Eingangswelle GE1 ist zentral innerhalb der als Hohlwelle ausgebildeten zweiten Eingangswelle GE2 angeordnet. Beide Eingangswellen GE1, GE2 sind eingangsseitig über jeweils eine zugeordnete Reibungskupplung K1, K2 mit der Triebwelle 4 eines Verbrennungsmotors VM verbindbar. Ausgangsseitig sind beide Eingangswellen GE1, GE2 jeweils über mehrere selektiv schaltbare Gangradsätze R, G2, G4, G6 bzw. G1, G3, G5, G7 mit einer ersten Vorgelegewelle VG1 und einer zweiten Vorgelegewelle VG2 in Triebverbindung bringbar, die über jeweils eine Ausgangskonstante AK1, AK2 mit der Ausgangswelle GA in Triebverbindung stehen.

Vorliegend sind der ersten Eingangswelle GE1 der Umkehr-Gangradsatz R des Rückwärtsgangs und die Gangradsätze G2, G4, G6 der geraden Vorwärtsgänge zugeordnet, die paarweise in einer gemeinsamen Radialebene angeordnet sind und jeweils ein gemeinsames Festrad nutzen. Der Umkehr-Gangradsatz R des Rückwärtsgangs umfasst ein auf der zweiten Vorgelegewelle VG2 angeordnetes Losrad 14 und den in derselben Radialebene zwischen der ersten Eingangswelle GE1 und der ersten Vorgelegewelle VG1 angeordneten Gangradsatz G2 des zweiten Vorwärtsgangs. Der zweiten Eingangswelle GE2 sind die Gangradsätze G1, G3, G5, G7 der ungeraden Vorwärtsgänge zugeordnet, die paarweise in einer gemeinsamen Radialebene angeordnet sind und jeweils ein gemeinsames Festrad nutzen.

Die Losräder und die Gangkupplungen A bis H der Gangradsätze R, G2, G4, G6 bzw. G1, G3, G5, G7 sind jeweils auf einer der beiden Vorgelegewellen VG1, VG2 angeordnet, wogegen die betreffenden Festräder jeweils drehfest auf der jeweils zugeordneten Eingangswelle GE1, GE2 angeordnet sind. Die Gangkupplungen A bis H sind jeweils paarweise in einem gemeinsamen Schaltpaket S1, S2, S3, S4 zusammengefasst. So sind die Gangkupplungen A, B der Gangradsätze G3, G7 des dritten und des siebten Vorwärtsgangs in einem ersten Schaltpaket S1, die Gangkupplungen C, D des Umkehr-Gangradsatzes R des Rückwärtsgangs und des Gangradsatzes G6 des sechsten Vorwärtsgangs in einem zweiten Schaltpaket S2, die Gangkupplungen E, F der Gangradsätze G1, G5 des ersten und des fünften Vorwärtsgangs in einem dritten Schaltpaket S3, und die Gangkupplungen G, H der Gangradsätze G2, G4 des zweiten und des vierten Vorwärtsgangs in einem vierten Schaltpaket S4 angeordnet.

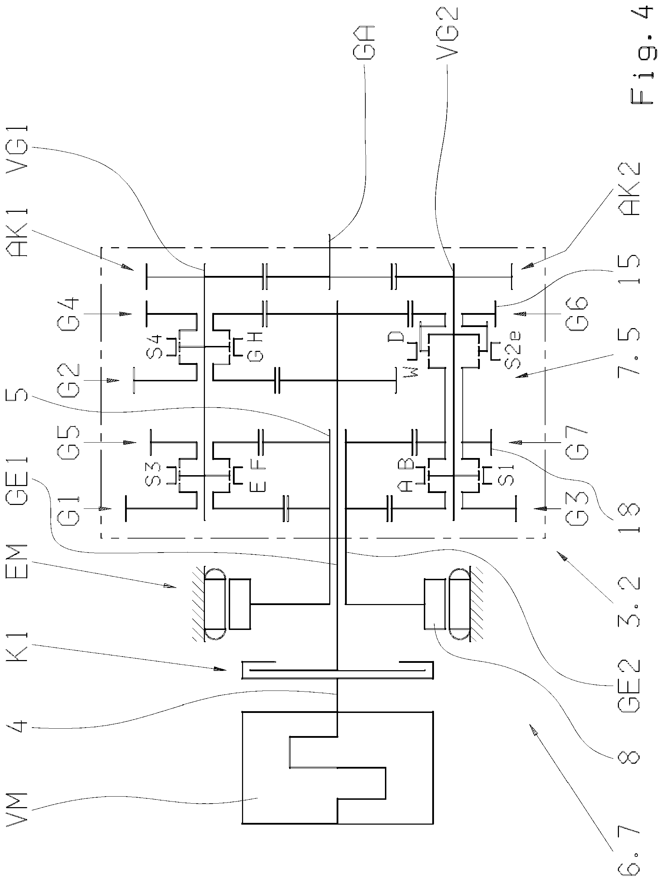

Für die nachfolgend beschriebenen Ausführungsformen eines Schaltgetriebes 3.1, 3.2 eines Hybridantriebs 6.6, 6.7 nach den Figuren 3 und 4 ist es wichtig festzuhalten, dass der unmittelbar axial benachbart zu dem getriebeseitigen Ende 5 der zweiten Eingangswelle GE2 angeordnete Umkehr-Gangradsatz R und der axial daneben angeordnete Gangradsatz G6 der ersten Eingangswelle GE1 zugeordnet sind, und dass die Losräder 14, 15 sowie die zugeordneten Gangkupplungen C, D dieser Gangradsätze R, G6 auf der zweiten Vorgelegewelle VG2 angeordnet sind. Für die zweite Ausführungsform des Schaltgetriebes 3.2 nach Fig. 4 ist zudem von Bedeutung, dass auch das Losrad 18 und die zugeordnete Gangkupplung B des der zweiten Eingangswelle GE2 zugeordneten und an deren getriebeseitigen Ende 5 angeordneten Gangradsatzes G7 ebenfalls auf der zweiten Vorgelegewelle VG2 angeordnet sind.

Ausgehend von dem Doppelkupplungsgetriebe 3.0 nach Fig. 6 ist eine erste Ausführungsform eines Schaltgetriebes 3.1 eines Hybridantriebs 6.6 nach Fig. 3 dadurch geschaffen, dass anstelle des Umkehr-Gangradsatzes R des Rückwärtsgangs und der zugeordneten Gangkupplung C eine Koppelvorrichtung 7.4 vorgesehen ist, mittels der die beiden Eingangswellen GE1, GE2 miteinander in Triebverbindung bringbar sind. Die Koppelvorrichtung 7.4 gemäß Fig. 3 umfasst eine Getriebestufe GK' mit einem auf der zweiten Vorgelegewelle VG2 drehbar gelagerten Losrad 16 und einem an dem getriebeseitigen Ende 5 der zweiten Eingangswelle GE2 drehfest angeordneten Festrad 17 sowie mit einer Schaltkupplung V, die in dem Schaltgetriebe 3.1 anstelle des Umkehr-Gangradsatzes R und der zugeordneten Gangkupplung C des Rückwärtsgangs des zu Grunde liegenden Doppelkupplungsgetriebes 3.0 (Fig. 6) angeordnet sind.

Die Schaltkupplung V der Getriebestufe GK' ist mit der Gangkupplung D des Gangradsatzes G6 des sechsten Vorwärtsgangs in einem gemeinsamen Schaltpaket S2d zusammengefasst, über das das Losrad 15 des Gangradsatzes G6 des sechsten Vorwärtsgangs in einer ersten Schaltstellung drehfest mit dem Losrad 16 der Getriebestufe GK' gekoppelt ist, in einer Neutralstellung ungekoppelt ist, und in einer zweiten Schaltstellung drehfest mit der zweiten Vorgelegewelle VG2 gekoppelt ist.

Die zwischen der zweiten Vorgelegewelle VG2 und der zweiten Eingangswelle GE2 wirksame Übersetzung i_{GK}' der Getriebestufe GK' entspricht bevorzugt der Übersetzung i_{G6} des Gangradsatzes G6 des sechsten Vorwärtsgangs (i_{GK}' = i_{G6}), da die wirksame Koppelübersetzung i_{K} zwischen der ersten Eingangswelle GE1 und der zweiten Eingangswelle GE2 bei geschlossener Schaltkupplung V dann gleich eins ist (i_{K} = i_{G6} / i_{GK}' = 1).

Eine zweite aus dem Doppelkupplungsgetriebe 3.0 nach Fig. 6 abgeleitete Ausführungsform des Schaltgetriebes 3.2 eines Hybridantriebs 6.7 nach Fig. 4 ist weitgehend identisch mit dem Schaltgetriebe 3.1 gemäß Fig. 3. Der wesentliche Unterschied dazu besteht darin, dass die Koppelvorrichtung 7.5 nunmehr den axial benachbarten, der zweiten Eingangswelle GE2 zugeordneten Gangradsatz G7 des siebten Vorwärtsgangs und eine Schaltkupplung W umfasst, d.h. dass anstelle einer separaten Getriebestufe GK' der Gangradsatz G7 des siebten Vorwärtsgangs zusätzlich zur Kopplung der beiden Eingangswellen GE1, GE2 genutzt wird.

Die Schaltkupplung W ist mit der Gangkupplung D des Gangradsatzes G6 des sechsten Vorwärtsgangs in einem gemeinsamen Schaltpaket S2e zusammengefasst, über das das Losrad 15 des Gangradsatzes G6 des sechsten Vorwärtsgangs in einer ersten Schaltstellung drehfest mit dem Losrad 18 des Gangradsatzes G7 des siebten Vorwärtsgangs gekoppelt ist, in einer Neutralstellung ungekoppelt ist, und in einer zweiten Schaltstellung drehfest mit der zweiten Vorgelegewelle VG2 gekoppelt ist. Dem Vorteil der Einsparung einer separaten Getriebestufe GK' steht der mögliche Nachteil einer von eins verschiedenen Koppelübersetzung i_{K} gegenüber (i_{K} ≠ 1). Die bei geschlossener Schaltkupplung W zwischen der ersten Eingangswelle GE1 und der zweiten Eingangswelle GE2 wirksame Koppelübersetzung i_{K} ergibt sich in der vorliegenden Ausführung des Schaltgetriebes 3.2 aus der Beziehung i_{K} = i_{G6} / i_{G7} > 1.

Auch die nach dem Grundprinzip der Erfindung ausgebildeten Schaltgetriebe 3.1, 3.2 der Hybridantriebe 6.6, 6.7 gemäß den Figuren 3 und 4 sind jeweils mit geringen Änderungen bauraumneutral und ohne wesentliche Funktionseinschränkungen aus dem Doppelkupplungsgetriebe 3.0 nach Fig. 6 abgeleitet sowie entsprechend kostengünstig herstellbar.

### Bezugszeichen

- 2.0: Doppelkupplungsgetriebe
- 2.1: Schaltgetriebe
- 2.2: Schaltgetriebe
- 3.0: Doppelkupplungsgetriebe
- 3.1: Schaltgetriebe
- 3.2: Schaltgetriebe
- 4: Triebwelle von VM
- 5: Getriebeseitiges Ende von GE2.
- 6.4: Hybridantrieb
- 6.5: Hybridantrieb
- 6.6: Hybridantrieb
- 6.7: Hybridantrieb
- 7.2: Koppelvorrichtung
- 7.3: Koppelvorrichtung
- 7.4: Koppelvorrichtung
- 7.5: Koppelvorrichtung
- 8: Rotor von EM
- 8': Rotor von EM'
- 8": Rotor von EM"
- 9': Losrad von R
- 10': Losrad von G1
- 11: Losrad von GK
- 12: Festrad von GK
- 13: Losrad von G4
- 14: Losrad von R
- 15: Losrad von G6
- 16: Losrad von GK'
- 17: Festrad von GK'
- 18: Losrad von G
- A: Gangkupplung von G2 und G3
- AK1: Erste Ausgangskonstante
- AK2: Zweite Ausgangskonstante
- B: Gangkupplung von G4 und G7
- C: Gangkupplung von R
- D: Gangkupplung von G1 und G6
- E: Gangkupplung von G3 und G1
- EM: Elektromaschine
- EM': Elektromaschine
- EM": Elektromaschine
- F: Gangkupplung von G1 und G5
- G: Gangkupplung von G2
- G1 - G7: Gangradsätze der Vorwärtsgänge
- GA: Ausgangswelle
- GE1: Erste Eingangswelle
- GE2: Zweite Eingangswelle
- GK: Getriebestufe
- GK': Getriebestufe
- H: Gangkupplung von G4
- i_{G1}: Übersetzung von G1
- i_{G4}: Übersetzung von G4
- i_{G6}: Übersetzung von G6
- i_{G7}: Übersetzung von G7
- i_{GK}: Übersetzung von GK
- i_{GK}': Übersetzung von GK'
- i_{K}: Koppelübersetzung
- i_{KE}: Übersetzung von KE
- i_{KE}': Übersetzung von KE'
- K1: Erste Reibungskupplung, Trennkupplung
- K1': Klauenkupplung, Trennkupplung
- K2: Zweite Reibungskupplung
- KE: Eingangsgetriebestufe
- KE': Eingangsgetriebestufe
- R: Umkehr-Gangradsatz des Rückwärtsgangs
- S1 - S4: Schaltpakete
- S2b: Schaltpaket
- S2c: Schaltpaket
- S2d: Schaltpaket
- S2e: Schaltpaket
- T: Schaltkupplung
- U: Schaltkupplung
- V: Schaltkupplung
- VG1: Erste Vorgelegewelle
- VG2: Zweite Vorgelegewelle
- VM: Verbrennungsmotor
- W: Schaltkupplung

## Patentansprüche

1. Schaltgetriebe eines Hybridantriebs für ein Kraftfahrzeug, mit zwei koaxialen Eingangswellen (GE1, GE2) und einer gemeinsamen Ausgangswelle (GA), wobei die erste Eingangswelle (GE1) mit der Triebwelle (4) eines Verbrennungsmotors (VM) verbindbar und über eine erste Gruppe selektiv schaltbarer Gangradsätze (G1, G3, G5; G2, G4, G6) mit der Ausgangswelle (GA) in Triebverbindung bringbar ist, wobei die zweite Eingangswelle (GE2) mit dem Rotor (8, 8', 8") einer als Motor und als Generator betreibbaren Elektromaschine (EM, EM', EM") in Triebverbindung steht und über eine zweite Gruppe selektiv schaltbarer Gangradsätze (G2, G4; G1, G3, G5, G7) mit der Ausgangswelle (GA) in Triebverbindung bringbar ist, wobei beide Eingangswellen (GE1, GE2) über eine schaltbare Koppelvorrichtung (7.2, 7.3, 7.4, 7.5) miteinander in Triebverbindung bringbar sind, und wobei die erste Eingangswelle (GE1) zentral angeordnet ist, die zweite Eingangswelle (GE2) als eine Hohlwelle ausgebildet und koaxial über der ersten Eingangswelle (GE1) angeordnet ist, und wobei die Koppelvorrichtung (7.2, 7.3, 7.4, 7.5) eine Getriebestufe (GK, G4; GK', G7) und eine schaltbare Kupplung (T, U; V, W) umfasst, **dadurch gekennzeichnet, dass** die Schaltkupplung (T, U; V, W) der Getriebestufe (GK, GK') mit einer Gangkupplung (D) des Gangradsatzes (G1,G6) eines Vorwärtsganges in einem gemeinsamen Schaltpaket (S2b, S2c; S2d, S2e) zusammengefasst ist, über das das Losrad (10'; 15) des Gangradsatzes (G1; G6) des Vorwärtsgangs in einer ersten Schaltstellung drehfest mit dem Losrad (11, 13; 16, 18) der Getriebestufe (GK; GK') oder eines Gangradsatzes (G4) des vierten Vorwärtsgangs gekoppelt ist, in einer Neutralstellung ungekoppelt ist, und in einer zweiten Schaltstellung drehfest mit der Ausgangswelle (GA) gekoppelt ist.

2. Schaltgetriebe eines Hybridantriebs für ein Kraftfahrzeug, mit zwei koaxialen Eingangswellen (GE1, GE2) und einer gemeinsamen Ausgangswelle (GA), wobei die erste Eingangswelle (GE1) mit der Triebwelle (4) eines Verbrennungsmotors (VM) verbindbar und über eine erste Gruppe selektiv schaltbarer Gangradsätze (G1, G3, G5; G2, G4, G6) mit der Ausgangswelle (GA) in Triebverbindung bringbar ist, wobei die zweite Eingangswelle (GE2) mit dem Rotor (8, 8', 8") einer als Motor und als Generator betreibbaren Elektromaschine (EM, EM', EM") in Triebverbindung steht und über eine zweite Gruppe selektiv schaltbarer Gangradsätze (G2, G4; G1, G3, G5, G7) mit der Ausgangswelle (GA) in Triebverbindung bringbar ist, wobei beide Eingangswellen (GE1, GE2) über eine schaltbare Koppelvorrichtung (7.2, 7.3, 7.4, 7.5) miteinander in Triebverbindung bringbar sind, und wobei die erste Eingangswelle (GE1) zentral angeordnet ist, die zweite Eingangswelle (GE2) als eine Hohlwelle ausgebildet und koaxial über der ersten Eingangswelle (GE1) angeordnet ist, und wobei die Koppelvorrichtung (7.2, 7.3, 7.4, 7.5) eine Getriebestufe (GK, G4; GK', G7) und eine schaltbare Kupplung (T, U; V, W) umfasst, **dadurch gekennzeichnet, dass** die Schaltkupplung (T, U; V, W) der Getriebestufe (GK, GK') mit einer Gangkupplung (D) des Gangradsatzes (G1,G6) eines Vorwärtsganges in einem gemeinsamen Schaltpaket (S2b, S2c; S2d, S2e) zusammengefasst ist, über das das Losrad (10'; 15) des Gangradsatzes (G1;G6) des Vorwärtsgangs in einer ersten Schaltstellung drehfest mit dem Losrad (11, 13; 16, 18) der Getriebestufe (GK; GK') oder eines Gangradsatzes (G7) des siebten Vorwärtsgangs gekoppelt ist, in einer Neutralstellung ungekoppelt ist, und in einer zweiten Schaltstellung drehfest mit einer Vorgelegewelle (VG2) gekoppelt ist.

3. Schaltgetriebe nach Anspruch 1 oder 2, **dadurch gekennzeichnet, dass** ein Rückwärts-Anfahren oder Rückwärts-Rangieren über den Gangradsatz des Vorwärtsgangs in Verbindung mit einer Drehrichtungsumkehr mittels der Elektromaschine (EM, EM', EM") möglich ist.

4. Schaltgetriebe nach Anspruch 1, **dadurch gekennzeichnet, dass** die Gangradsätze (G1 - G5), der Vorwärtsgänge jeweils unmittelbar zwischen einer der beiden Eingangswellen (GE1, GE2) und der Ausgangswelle (GA) angeordnet sind, wobei zumindest das Losrad (10') und die Gangkupplung (D) des der ersten Eingangswelle (GE1) zugeordneten und axial benachbart zu dem getriebeseitigen Ende (5) der zweiten Eingangswelle (GE2) angeordneten Gangradsatzes (G1) des ersten Vorwärtsganges auf der Ausgangswelle (GA) angeordnet sind, wobei die Koppelvorrichtung (7.2) eine Getriebestufe (GK), die aus einem auf der Ausgangswelle (GA) drehbar gelagerten Losrad (11) und einem an dem getriebeseitigen Ende (5) der zweiten Eingangswelle (GE2) drehfest angeordneten Festrad (12) besteht, und eine Schaltkupplung (T) zur Kopplung des Losrades (10') des Gangradsatzes (G1) des ersten Vorwärtsganges mit dem Losrad (11) der Getriebestufe (GK) umfasst.

5. Schaltgetriebe nach Anspruch 1 oder 3, **dadurch gekennzeichnet, dass** die Gangradsätze (G1 - G5) der Vorwärtsgänge jeweils unmittelbar zwischen einer der beiden Eingangswellen (GE1, GE2) und der Ausgangswelle (GA) angeordnet sind, wobei zumindest die Losräder (10', 13) und die zugeordneten Gangkupplungen (B, D) des der ersten Eingangswelle (GE1) zugeordneten und axial benachbart zu dem getriebeseitigen Ende (5) der zweiten Eingangswelle (GE2) angeordneten Gangradatzes (G1) des ersten Vorwärtsganges sowie des der zweiten Eingangswelle (GE2) zugeordneten und an dem getriebeseitigen Ende (5) der zweiten Eingangswelle (GE2) angeordneten Gangradsatzes (G4) des vierten Vorwärtsganges auf der Ausgangswelle (GA) angeordnet sind und wobei die Koppelvorrichtung (7.3) den Gangradsatz (G4) des vierten Vorwärtsganges und eine Schaltkupplung (U) zur Kopplung des Losrades (10') des Gangradsatzes (G1) des ersten Vorwärtsganges mit dem Losrad (13) des Gangradsatzes (G4) des vierten Vorwärtsganges umfasst.

6. Schaltgetriebe nach Anspruch 2, **dadurch gekennzeichnet, dass** die Gangradsätze (G1 - G7) der Vorwärtsgänge jeweils zwischen einer der beiden Eingangswellen (GE1, GE2) und einer von zwei jeweils über eine Ausgangskonstante (AK1, AK2) mit der Ausgangswelle (GA) in Triebverbindung stehenden Vorgelegewellen (VG1, VG2) angeordnet sind, wobei zumindest das Losrad (15) sowie die zugeordnete Gangkupplung (D) des der ersten Eingangswelle (GE1) und einer (VG2) der beiden Vorgelegewellen (VG1, VG2) zugeordneten sowie axial benachbart zu dem getriebeseitigen Ende (5) der zweiten Eingangswelle (GE2) angeordneten Gangradsatzes (G6) des sechsten Vorwärtsganges auf der betreffenden Vorgelegewelle (VG2) angeordnet sind, die Koppelvorrichtung (7.4) eine Getriebestufe (GK'), die aus einem auf der betreffenden Vorgelegewelle (VG2) drehbar gelagerten Losrad (16) und einem an dem getriebeseitigen Ende (5) der zweiten Eingangswelle (GE2) drehfest angeordneten Festrad (17) besteht, und eine Schaltkupplung (V) zur Kopplung des Losrades (15) des Gangradsatzes (G6) des sechsten Vorwärtsganges mit dem Losrad (16) der Getriebestufe (GK') umfasst.

7. Schaltgetriebe nach Anspruch 2 oder 6, **dadurch gekennzeichnet, dass** die Übersetzung (i_{GK}; i_{GK}') der Getriebestufe (GK; GK') der Übersetzung (i_{G1}; i_{G6}) des über die Schaltkupplung (T; V) der Koppelvorrichtung (7.2; 7.4) koppelbaren Gangradsatzes (G1; G6) entspricht (i_{GK} = i_{G1}; i_{GK}' = i_{G6}).

8. Schaltgetriebe nach Anspruch 2, 6 oder 7, **dadurch gekennzeichnet, dass** die Gangradsätze (G1 - G7) der Vorwärtsgänge jeweils zwischen einer der beiden Eingangswellen (GE1, GE2) und einer von zwei jeweils über eine Ausgangskonstante (AK1, AK2) mit der Ausgangswelle (GA) in Triebverbindung stehenden Vorgelegewellen (VG1, VG2) angeordnet sind, wobei zumindest die Losräder (15, 18) sowie die zugeordneten Gangkupplungen (B, D) der ersten Eingangswelle (GE1) und einer (VG2) der beiden Vorgelegewellen (VG1, VG2) zugeordneten und axial benachbart zu dem getriebeseitigen Ende (5) der zweiten Eingangswelle (GE2) angeordneten Gangradsatzes (G6) des sechsten Vorwärtsganges, sowie des der zweiten Eingangswelle (GE2) zugeordneten und an dem getriebeseitigen Ende (5) der zweiten Eingangswelle (GE2) angeordneten Gangradsatzes (G7) des siebten Vorwärtsganges auf der betreffenden Vorgelegewelle (VG2) angeordnet sind, wobei die Koppelvorrichtung (7.5) den Gangradsatz (G7) des siebten Vorwärtsganges und eine Schaltkupplung (W) zur Kopplung des Losrades (15) des Gangradsatzes (G6) des sechsten Vorwärtsganges mit dem Losrad (18) des Gangradsatzes (G7) des siebten Vorwärtsganges umfasst.

9. Schaltgetriebe nach einem der vorherigen Ansprüche, **dadurch gekennzeichnet, dass** die erste Eingangswelle (GE1) über eine Reibungskupplung (K1) mit der Triebwelle (4) des Verbrennungsmotors (VM) verbindbar ist.

10. Schaltgetriebe nach einem der Ansprüche 1 bis 8, **dadurch gekennzeichnet, dass** die erste Eingangswelle (GE1) über eine Klauenkupplung (K1') mit der Triebwelle (4) des Verbrennungsmotors (VM) verbindbar ist.

11. Schaltgetriebe nach einem der Ansprüche 1 bis 8, **dadurch gekennzeichnet, dass** die erste Eingangswelle (GE1) unmittelbar drehfest mit der Triebwelle (4) des Verbrennungsmotors (VM) verbunden ist.

12. Schaltgetriebe nach einem der Ansprüche 1 bis 11, **dadurch gekennzeichnet, dass** die Elektromaschine (EM) koaxial über der ersten Eingangswelle (GE1) angeordnet ist, und der Rotor (8) der Elektromaschine (EM) unmittelbar drehfest mit der zweiten Eingangswelle (GE2) verbunden ist.

13. Schaltgetriebe nach einem der Ansprüche 1 bis 11, **dadurch gekennzeichnet, dass** die Elektromaschine (EM') achsparallel benachbart zu der ersten Eingangswelle (GE1) angeordnet ist, und der Rotor (8') der Elektromaschine (EM') über eine Eingangsgetriebestufe (KE) mit einer Übersetzung (i_{KE}) größer als eins mit der zweiten Eingangswelle (GE2) in Triebverbindung steht (i_{KE} > 1,0).

14. Schaltgetriebe nach einem der Ansprüche 1 bis 11, **dadurch gekennzeichnet, dass** die Elektromaschine (EM") koaxial über der ersten Eingangswelle (GE1) angeordnet ist, und der Rotor (8") der Elektromaschine (EM") über eine als Planetengetriebe ausgebildete Eingangsgetriebestufe (KE') mit einer Übersetzung (iKE') größer als eins mit der zweiten Eingangswelle (GE2) in Triebverbindung steht (iKE'>1,0).

## Claims

1. Manual gearbox of a hybrid drive for a motor vehicle, having two coaxial input shafts (GE1, GE2) and a common output shaft (GA), it being possible for the first input shaft (GE1) to be connected to the drive shaft (4) of an internal combustion engine (VM) and to be drive-connected to the output shaft (GA) via a first group of selectively shiftable gear sets (G1, G3, G5; G2, G4, G6), the second input shaft (GE2) being drive-connected to the rotor (8, 8', 8") of an electric machine (EM, EM', EM") which can be operated as a motor and as a generator, and it being possible for the said second input shaft to be drive-connected to the output shaft (GA) via a second group of selectively shiftable gear sets (G2, G4; G1, G3, G5, G7), it being possible for both input shafts (GE1, GE2) to be drive-connected to one another via a switchable coupling apparatus (7.2, 7.3, 7.4, 7.5), and the first input shaft (GE1) being arranged centrally, the second input shaft (GE2) being configured as a hollow shaft and being arranged coaxially above the first input shaft (GE1), and the coupling apparatus (7.2, 7.3, 7.4, 7.5) comprising a transmission stage (GK, G4; GK', G7) and a switchable clutch (T, U; V, W), **characterized in that** the shifting clutch (T, U; V, W) of the transmission stage (GK, GK') is combined with a gear clutch (D) of the gear set (G1, G6) of a forward gear in a common shifting package (S2b, S2c; S2d, S2e), via which the idler gear (10'; 15) of the gear set (G1; G6) of the forward gear is coupled in a first shifting position fixedly to the idler gear (11, 13; 16, 18) of the transmission stage (GK; GK') or of a gear set (G4) of the fourth forward gear so as to rotate with it, is uncoupled in a neutral position, and is coupled fixedly to the output shaft (GA) so as to rotate with it in a second shifting position.

2. Manual gearbox of a hybrid drive for a motor vehicle, having two coaxial input shafts (GE1, GE2) and a common output shaft (GA), it being possible for the first input shaft (GE1) to be connected to the drive shaft (4) of an internal combustion engine (VM) and to be drive-connected to the output shaft (GA) via a first group of selectively shiftable gear sets (G1, G3, G5; G2, G4, G6), the second input shaft (GE2) being drive-connected to the rotor (8, 8', 8") of an electric machine (EM, EM', EM") which can be operated as a motor and as a generator, and it being possible for the said second input shaft to be drive-connected to the output shaft (GA) via a second group of selectively shiftable gear sets (G2, G4; G1, G3, G5, G7), it being possible for both input shafts (GE1, GE2) to be drive-connected to one another via a switchable coupling apparatus (7.2, 7.3, 7.4, 7.5), and the first input shaft (GE1) being arranged centrally, the second input shaft (GE2) being configured as a hollow shaft and being arranged coaxially above the first input shaft (GE1), the coupling apparatus (7.2, 7.3, 7.4, 7.5) comprising a transmission stage (GK, G4; GK', G7) and a switchable clutch (T, U; V, W), **characterized in that** the shifting clutch (T, U; V, W) of the transmission stage (GK, GK') combined with a gear clutch (D) of the gear set (G1, G6) of a forward gear in a common shifting package (S2b, S2c, S2d, S2e), via which the idler gear (10'; 15) of the gear set (G1; G6) of the forward gear is coupled in a first shifting position fixedly to the idler gear (11, 13; 16, 18) of the transmission stage (GK; GK') or of a gear set (G7) of the seventh forward gear so as to rotate with it, is uncoupled in a neutral position, and is coupled fixedly to a countershaft (VG2) so as to rotate with it in a second shifting position.

3. Manual gearbox according to Claim 1 or 2, **characterized in that** reverse starting or reverse manoeuvring is possible by way of the gear set of the forward gear in conjunction with a rotational direction reversal by means of the electric machine (EM, EM', EM'').

4. Manual gearbox according to Claim 1, **characterized in that** the gear sets (G1-G5) of the forward gears are arranged in each case directly between one of the two input shafts (GE1, GE2) and the output shaft (GA), at least the idler gear (10') and the gear clutch (D) of the gear set (G1) of the first forward gear which is assigned to the first input shaft (GE1) and is arranged axially adjacently with respect to the gearbox-side end (5) of the second input shaft (GE2) being arranged on the output shaft (GA), the coupling apparatus (7.2) comprising a transmission stage (GK) which consists of an idler gear (11) which is mounted rotatably on the output shaft (GA) and a fixed gear (12) which is arranged fixedly at the gearbox-side end (5) of the second input shaft (GE2) so as to rotate with it, and a shifting clutch (T) for coupling the idler gear (10') of the gear set (G1) of the first forward gear to the idler gear (11) of the transmission stage (GK).

5. Manual gearbox according to Claim 1 or 3, **characterized in that** the gear sets (G1-G5) of the forward gears are arranged in each case directly between one of the two input shafts (GE1, GE2) and the output shaft (GA), at least the idler gears (10', 13) and the associated gear clutches (B, D) of the gear set (G1) of the first forward gear which is assigned to the first input shaft (GE1) and is arranged axially adjacently with respect to the gearbox-side end (5) of the second input shaft (GE2) and of the gear set (G4) of the fourth forward gear which is assigned to the second input shaft (GE2) and is arranged at the gearbox-side end (5) of the second input shaft (GE2) being arranged on the output shaft (GA) and the coupling apparatus (7.3) comprising the gear set (G4) of the fourth forward gear and a shifting clutch (U) for coupling the idler gear (10') of the gear set (G1) of the first forward gear to the idler gear (13) of the gear set (G4) of the fourth forward gear.

6. Manual gearbox according to Claim 2, **characterized in that** the gear sets (G1-G7) of the forward gears are arranged in each case between one of the two input shafts (GE1, GE2) and one of two countershafts (VG1, VG2) which are drive-connected in each case via an output constant (AK1, AK2) to the output shaft (GA), at least the idler gear (15) and also the associated gear clutch (D) of the gear set (G6) of the sixth forward gear which is assigned to the first input shaft (GE1) and one (VG2) of the two countershafts (VG1, VG2) and also is arranged axially adjacently with respect to the gearbox-side end (5) of the second input shaft (GE2) being arranged on the relevant countershaft (VG2), the coupling apparatus (7.4) comprising a transmission stage (GK') which consists of an idler gear (16) which is mounted rotatably on the relevant countershaft (VG2) and a fixed gear (17) which is arranged fixedly at the gearbox-side end (5) of the second input shaft (GE2) so as to rotate with it, and a shifting clutch (V) for coupling the idler gear (15) of the gear set (G6) of the sixth forward gear to the idler gear (16) of the transmission stage (GK').

7. Manual gearbox according to Claim 2 or 6, **characterized in that** the transmission ratio (i_{GK}; i_{GK'}) of the transmission stage (GK; GK') corresponds to the transmission ratio (i_{G1}; i_{G6}) of the gear set (G1; G6) which can be coupled via the shifting clutch (T; V) of the coupling apparatus (7.2; 7.4) (i_{GK} = i_{G1}; i_{GK'} = i_{G6}).

8. Manual gearbox according to Claim 2, 6 or 7, **characterized in that** the gear sets (G1-G7) of the forward gears are arranged in each case between one of the two input shafts (GE1, GE2) and one of two countershafts (VG1, VG2) which are drive-connected in each case via an output constant (AK1, AK2) to the output shaft (GA), at least the idler gears (15, 18) and also the associated gear clutches (B, D) of the gear set (G6) of the sixth forward gear which is assigned to the first input shaft (GE1) and one (VG2) of the two countershafts (VG1, VG2) and is arranged axially adjacently with respect to the gearbox-side end (5) of the second input shaft (GE2) and of the gear set (G7) of the seventh forward gear which is assigned to the second input shaft (GE2) and is arranged at the gearbox-side end (5) of the second input shaft (GE2) being arranged on the relevant countershaft (VG2), the coupling apparatus (7.5) comprising the gear set (G7) of the seventh forward gear and a shifting clutch (W) for coupling the idler gear (15) of the gear set (G6) of the sixth forward gear to the idler gear (18) of the gear set (G7) of the seventh forward gear.

9. Manual gearbox according to one of the preceding claims, **characterized in that** the first input shaft (GE1) can be connected via a friction clutch (K1) to the drive shaft (4) of the internal combustion engine (VM).

10. Manual gearbox according to one of Claims 1 to 8, **characterized in that** the first input shaft (GE1) can be connected via a claw coupling (K1') to the drive shaft (4) of the internal combustion engine (VM).

11. Manual gearbox according to one of Claims 1 to 8, **characterized in that** the first input shaft (GE1) is directly connected fixedly to the drive shaft (4) of the internal combustion engine (VM) so as to rotate with it.

12. Manual gearbox according to one of Claims 1 to 11, **characterized in that** the electric machine (EM) is arranged coaxially above the first input shaft (GE1), and the rotor (8) of the electric machine (EM) is directly connected fixedly to the second input shaft (GE2) so as to rotate with it.

13. Manual gearbox according to one of Claims 1 to 11, **characterized in that** the electric machine (EM') is arranged adjacently with respect to the first input shaft (GE1) in an axially parallel manner, and the rotor (8') of the electric machine (EM') is drive-connected via an input transmission stage (KE) with a transmission ratio (i_{KE}) of greater than one to the second input shaft (GE2) (i_{KE} > 1.0).

14. Manual gearbox according to one of Claims 1 to 11, **characterized in that** the electric machine (EM") is arranged coaxially above the first input shaft (GE1), and the rotor (8") of the electric machine (EM") is drive-connected to the second input shaft (GE2) via an input transmission stage (KE') which is configured as a planetary gear mechanism with a transmission ratio (iKE') of greater than one (iKE' > 1.0).

## Revendications

1. Boîte de vitesses d'un entraînement hybride pour un véhicule automobile, avec deux arbres d'entrée (GE1, GE2) coaxiaux et un arbre de sortie (GA) commun, le premier arbre d'entrée (GE1) pouvant être relié à l'arbre d'entraînement (4) d'un moteur à combustion interne (VM) et pouvant être amené en liaison d'entraînement avec l'arbre de sortie (GA) via un premier groupe de jeux de pignons de rapport (G1, G3, G5 ; G2, G4, G6) connectables de façon sélective, le deuxième arbre d'entrée (GE2) étant en liaison d'entraînement avec le rotor (8, 8', 8") d'une machine électrique (EM, EM', EM") pouvant être entraînée comme un moteur et un générateur et pouvant être amenée en liaison d'entraînement avec l'arbre de sortie (GA) via un deuxième groupe de jeux de pignons de rapport (G2, G4 ; G1, G3, G5, G7) connectables de façon sélective, les deux arbres d'entrée (GE1, GE2) pouvant être amenés entre eux en liaison d'entraînement via un dispositif de couplage (7.2, 7.3, 7.4, 7.5) connectable, et le premier arbre d'entrée (GE1) étant disposé de façon centrale, le deuxième arbre d'entrée (GE2) étant réalisé sous la forme d'un arbre creux et étant disposé dans le plan coaxial au-dessus du premier arbre d'entrée (GE1), et le dispositif de couplage (7.2, 7.3, 7.4, 7.5) comprenant un étage de boîte de vitesses (GK, G4 ; GK', G7) et un embrayage (T, U ; V, W) connectable, **caractérisée en ce que** l'embrayage de changement de vitesse (T, U ; V, W) de l'étage de boîte de vitesses (GK, GK') est regroupé en un groupe de changement de vitesse (S2b, S2c ; S2d, S2e) commun avec un embrayage de rapport (D) du jeu de pignons de rapport (G1, G6) d'un rapport de marche avant, la roue libre (10' ; 15) du jeu de pignons de rapport (G1 ; G6) du rapport de marche avant étant couplée, via ledit groupe, dans une première position de changement de vitesse, solidairement en rotation, avec la roue libre (11, 13 ; 16, 18) de l'étage de boîte de vitesses (GK ; GK') ou d'un jeu de pignons de rapport (G4) du quatrième rapport de marche avant, étant découplée dans une position neutre et étant couplée, dans une deuxième position de changement de vitesse, solidairement en rotation avec l'arbre de sortie (GA).

2. Boîte de vitesses d'un entraînement hybride pour un véhicule automobile, avec deux arbres d'entrée (GE1, GE2) coaxiaux et un arbre de sortie (GA) commun, le premier arbre d'entrée (GE1) pouvant être relié à l'arbre d'entraînement (4) d'un moteur à combustion interne (VM) et pouvant être amené en liaison d'entraînement avec l'arbre de sortie (GA) via un premier groupe de jeux de pignons de rapport (G1, G3, G5 ; G2, G4, G6) connectables de façon sélective, le deuxième arbre d'entrée (GE2) étant en liaison d'entraînement avec le rotor (8, 8', 8") d'une machine électrique (EM, EM', EM") pouvant être entraînée comme un moteur et un générateur et pouvant être amenée en liaison d'entraînement avec l'arbre de sortie (GA) via un deuxième groupe de jeux de pignons de rapport (G2, G4 ; G1, G3, G5, G7) connectables de façon sélective, les deux arbres d'entrée (GE1, GE2) pouvant être amenés entre eux en liaison d'entraînement via un dispositif de couplage (7.2, 7.3, 7.4, 7.5) connectable, et le premier arbre d'entrée (GE1) étant disposé de façon centrale, le deuxième arbre d'entrée (GE2) étant réalisé sous la forme d'un arbre creux et étant disposé dans le plan coaxial au-dessus du premier arbre d'entrée (GE1), et le dispositif de couplage (7.2, 7.3, 7.4, 7.5) comprenant un étage de boîte de vitesses (GK, G4 ; GK', G7) et un embrayage (T, U ; V, W) connectable, **caractérisée en ce que** l'embrayage de changement de vitesse (T, U ; V, W) de l'étage de boîte de vitesses (GK, GK') est regroupé en un groupe de changement de vitesse (S2b, S2c ; S2d, S2e) commun avec un embrayage de rapport (D) du jeu de pignons de rapport (G1, G6) d'un rapport de marche avant, la roue libre (10' ; 15) du jeu de pignons de rapport (G1 ; G6) du rapport de marche avant étant couplée, via ledit groupe, dans une première position de changement de vitesse, solidairement en rotation, avec la roue libre (11, 13 ; 16, 18) de l'étage de boîte de vitesses (GK ; GK') ou d'un jeu de pignons de rapport (G7) du septième rapport de marche avant, étant découplée dans une position neutre, et étant couplée, dans une deuxième position de changement de vitesse, solidairement en rotation avec un arbre intermédiaire (VG2).

3. Boîte de vitesses selon la revendication 1 ou 2, **caractérisée en ce qu'**un démarrage en marche arrière ou une manoeuvre en marche arrière est possible par le biais du jeu de pignons de rapport du rapport de marche avant en association avec une inversion du sens de rotation au moyen de la machine électrique (EM, EM', EM'').

4. Boîte de vitesses selon la revendication 1, **caractérisée en ce que** les jeux de pignons de rapport (G1 - G5) des rapports de marche avant sont respectivement disposés directement entre un des deux arbres d'entrée (GE1, GE2) et l'arbre de sortie (GA), au moins la roue libre (10') et l'embrayage de rapport (D) du jeu de pignons de rapport (G1), associé au premier arbre d'entrée (GE1) et disposé dans le plan axial à côté de l'extrémité de côté de boîte de vitesses (5) du deuxième arbre d'entrée (GE2), du premier rapport de marche avant étant disposé sur l'arbre de sortie (GA), le dispositif de couplage (7.2) comprenant un étage de boîte de vitesses (GK) composé d'une roue libre (11) disposée de façon à pouvoir tourner sur l'arbre de sortie (GA) et d'une roue fixe (12) disposée solidairement en rotation au niveau de l'extrémité de côté de boîte de vitesses (5) du deuxième arbre d'entrée (GE2) ainsi qu'un embrayage de changement de vitesse (T) servant à coupler la roue libre (10') du jeu de pignons de rapport (G1) du premier rapport de marche avant à la roue libre (11) de l'étage de boîte de vitesses (GK).

5. Boîte de vitesses selon la revendication 1 ou 3, **caractérisée en ce que** les jeux de pignons de rapport (G1 - G5) des rapports de marche avant sont respectivement directement disposés entre un des deux arbres d'entrée (GE1, GE2) et l'arbre de sortie (GA), au moins les roues libres (10', 13) et les embrayages de rapport (B, D) associés du jeu de pignons de rapport (G1), associé au premier arbre d'entrée (GE1) et disposé dans le plan axial à côté de l'extrémité de côté de boîte de vitesses (5) du deuxième arbre d'entrée (GE2), du premier rapport de marche avant ainsi que du jeu de pignons de rapport (G4), associé au deuxième arbre d'entrée (GE2) et disposé au niveau de l'extrémité de côté de boîte de vitesses (5) du deuxième arbre d'entrée (GE2), du quatrième rapport de marche avant étant disposés sur l'arbre de sortie (GA) et le dispositif de couplage (7.3) comprenant le jeu de pignons de rapport (G4) du quatrième rapport de marche avant et un embrayage de changement de vitesse (U) servant à coupler la roue libre (10') du jeu de pignons de rapport (G1) du premier rapport de marche avant avec la roue libre (13) du jeu de pignons de rapport (G4) du quatrième rapport de marche avant.

6. Boîte de vitesses selon la revendication 2, **caractérisée en ce que** les jeux de pignons de rapport (G1 - G7) des rapports de marche avant sont respectivement disposés entre un des deux arbres d'entrée (GE1, GE2) et un des deux arbres intermédiaires (VG1, VG2) placés en liaison d'entraînement avec l'arbre de sortie (GA) via respectivement une constante de sortie (AK1, AK2), au moins la roue libre (15) et l'embrayage de rapport (D) associé du jeu de pignons de rapport (G6), associé au premier arbre d'entrée (GE1) ainsi qu'à un (VG2) des deux arbres intermédiaires (VG1, VG2) et disposé dans le plan axial à côté de l'extrémité de côté de boîte de vitesses (5) du deuxième arbre d'entrée (GE2), du sixième rapport de marche avant étant disposés sur l'arbre intermédiaire (VG2) concerné, le dispositif de couplage (7.4) comprenant un étage de boîte de vitesses (GK') composé d'une roue libre (16) disposée de façon à pouvoir tourner sur l'arbre intermédiaire (VG2) concerné et d'une roue fixe (17) disposée solidairement en rotation au niveau de l'extrémité de côté de boîte de vitesses (5) du deuxième arbre d'entrée (GE2) ainsi qu'un embrayage de changement de vitesse (V) servant à coupler la roue libre (15) du jeu de pignons de rapport (G6) du sixième rapport de marche avant à la roue libre (16) de l'étage de boîte de vitesses (GK').

7. Boîte de vitesses selon la revendication 2 ou 6, **caractérisée en ce que** la démultiplication (i_{GK} ; i_{GK}') de l'étage de boîte de vitesses (GK ; GK') correspond à la démultiplication (i_{G1} ; i_{G6}) du jeu de pignons de rapport (G1 ; G6) pouvant être couplé via l'embrayage de changement de vitesse (T ; V) du dispositif de couplage (7.2 ; 7.4) (i_{GK} = i_{G1} i_{GK}' = i_{G6}).

8. Boîte de vitesses selon la revendication 2, 6 ou 7, **caractérisée en ce que** les jeux de pignons de rapport (G1 - G7) des rapports de marche avant sont respectivement disposés entre un des deux arbres d'entrée (GE1, GE2) et un des deux arbres intermédiaires (VG1, VG2) respectivement placés en liaison d'entraînement avec l'arbre de sortie (GA) via une constante de sortie (AK1, AK2), au moins les roues libres (15, 18) et les embrayages de rapport (B, D) associés du jeu de pignons de rapport (G6), associé au premier arbre d'entrée (GE1) et à un (VG2) des deux arbres intermédiaires (VG1, VG2) et disposé dans le plan axial à côté de l'extrémité de côté de boîte de vitesses (5) du deuxième arbre d'entrée (GE2), du sixième rapport de marche avant, ainsi que du jeu de pignons de rapport (G7), associé au deuxième arbre d'entrée (GE2) et disposé au niveau de l'extrémité de côté de boîte de vitesses (5) du deuxième arbre d'entrée (GE2), du septième rapport de marche avant étant disposés sur l'arbre intermédiaire (VG2) concerné, le dispositif de couplage (7.5) comprenant le jeu de pignons de rapport (G7) du septième rapport de marche avant et un embrayage de changement de vitesse (W) servant à coupler la roue libre (15) du jeu de pignons de rapport (G6) du sixième rapport de marche avant avec la roue libre (18) du jeu de pignons de rapport (G7) du septième rapport de marche avant.

9. Boîte de vitesses selon l'une quelconque des revendications précédentes, **caractérisée en ce que** le premier arbre d'entrée (GE1) pouvant être relié à l'arbre d'entraînement (4) du moteur à combustion interne (VM) via un embrayage à friction (K1).

10. Boîte de vitesses selon l'une quelconque des revendications 1 à 8, **caractérisée en ce que** le premier arbre d'entrée (GE1) peut être relié à l'arbre d'entraînement (4) du moteur à combustion interne (VM) via un embrayage à griffes (K1').

11. Boîte de vitesses selon l'une quelconque des revendications 1 à 8, **caractérisée en ce que** le premier arbre d'entrée (GE1) est directement relié solidairement en rotation à l'arbre d'entraînement (4) du moteur à combustion interne (VM).

12. Boîte de vitesses selon l'une quelconque des revendications 1 à 11, **caractérisée en ce que** la machine électrique (EM) est disposée dans le plan coaxial au-dessus du premier arbre d'entrée (GE1) et que le rotor (8) de la machine électrique (EM) est directement relié solidairement en rotation au deuxième arbre d'entrée (GE2).

13. Boîte de vitesses selon l'une quelconque des revendications 1 à 11, **caractérisée en ce que** la machine électrique (EM') est disposée parallèlement à l'axe à côté du premier arbre d'entrée (GE1) et que le rotor (8') de la machine électrique (EM') est en liaison d'entraînement, via un étage d'entrée de boîte de vitesses (KE), avec une démultiplication (i_{KE}) plus importante que celle se produisant avec le deuxième arbre d'entrée (GE2) (i_{KE} > 1,0).

14. Boîte de vitesses selon l'une quelconque des revendications 1 à 11, **caractérisée en ce que** la machine électrique (EM") est disposée dans le plan coaxial au-dessus du premier arbre d'entrée (GE1) et que le rotor (8") de la machine électrique (EM") est en liaison d'entraînement, via un étage d'entrée de boîte de vitesses (KE') réalisé sous la forme d'un engrenage planétaire, avec une démultiplication (iKE') plus importante que celle se produisant avec le deuxième arbre d'entrée (GE2) (iKE' > 1,0).
